# EUROPEAN PATENT SPECIFICATION

(11) **EP 1 895 794 B1**
(45) Date of publication and mention of the grant of the patent: **11.03.2020**
(21) Application number: 07115228.4
(22) Date of filing: 29.08.2007
(51) Int. Cl.: H04W 24/06, H04M 1/24, H04L 29/08, G06F 3/14, H04W 88/02

(54) **Remote management system and method for portable electronic devices**
Fernsteuerungsvorrichtung und -verfahren für tragbare elektronische Geräte
Système et procédé de gestion à distance pour dispositifs éléctroniques portables

(30) Priority: 29.08.2006 US 468145; 28.08.2007 KR 20070086687
(43) Date of publication of application: 05.03.2008
(73) Proprietor: Samsung Electronics Co., Ltd., Suwon-si, Gyeonggi-do, 443-742 (KR)
(72) Inventor: Fan, Guoxin, Unknown (KR); Peddireddy, Sudheer Kumar, Unknown (KR); Budhati, Vam, Unknown (KR)
(74) Representative: Grünecker Patent- und Rechtsanwälte PartG mbB

(56) References cited:
- WO-A1-00/65464
- US-A- 5 283 861
- US-A1- 2003 003 907
- US-A1- 2006 190 608
- US-B1- 6 321 287
- US-B1- 6 556 208

## Description

The present invention relates to a management service for a portable electronic device, and more particularly to a remote management system and method for a portable electronic device.

With an increasing desire for information to be accessible anywhere at any time, an increasing number of portable electronic devices are emerging, especially with wireless communication capabilities. With each new generation of mobile communication devices, new features and complexity are added. Due to the added complexity of devices an increasing burden has been placed on customer care support to effectively and efficiently debug, configure, and manage the portable electronic devices in order to meet the needs and desires of users of the portable electronic devices.

When a user has a problem with the operation of a portable electronic device, they call a customer care number for the portable electronic device. Once connected with a customer care representative (CCR), the user will communicate the nature of their problem to the CCR and receive instructions accordingly. The process of the CCR describing the actions a user may need to take in order to debug, configure, and manage the portable electronic device is a difficult, error prone, and lengthy process, especially if the user is not familiar or comfortable with operating electronic devices. The process of the CCR describing the actions a user may need to take may also be difficult to communicate to users if there are new or complex features of the portable electronic device.

WO 00/65464 A1 discloses an apparatus for providing remote access and control of remote systems in that an input is forwarded to a client, which responds to it just as if they were made directly on the host machine. US 6,321,287 B1, US 2003/003907 A1, and US 2006/190608 A1 each disclose a portable electronic device, which is remotely controlled without a user's manipulation.

Accordingly, the present invention has been made to solve the above-mentioned problems occurring in the prior art. It is the object of the present invention to provide a management system and method for a portable electronic device which can remotely manage the portable electronic device.

This object is solved by the subject matter of the independent claims. Independent claim 1 refers to a remote management system for a portable electronic device and independent claim 6 refers to a remote management method for a portable electronic device.

Preferred embodiments are defined in the dependent claims.

Embodiments and examples not falling within the scope of the claims are not to be considered part of the invention and are included for illustrative purposes only.

The above and other aspects, features and advantages of the present invention will be more apparent from the following detailed description taken in conjunction with the accompanying drawings, in which:
FIG 1. depicts a remote management system for a portable electronic device according to one embodiment of the present disclosure;
FIG. 2 depicts a view illustrating the operation of the portable electronic device according to one embodiment of the present disclosure;
FIG. 3 depicts a view illustrating the operation of the customer care computer according to one embodiment of the present disclosure;
FIG. 4 depicts a view illustrating information of a portable electronic device displayed on a customer care computer according to one embodiment of the present disclosure;
FIG. 5 depicts a view illustrating information of a portable electronic device displayed on a customer care computer according to another embodiment of the present disclosure;
FIG. 6 depicts an exemplary general purpose computer system suitable for implementing several embodiments of the disclosure; and
FIG. 7 depicts an exemplary portable electronic device suitable for implementing several embodiments of the disclosure.

Hereinafter, exemplary embodiments of the present invention will be described with reference to the accompanying drawings. In the following description of the present invention, a detailed description of known functions and configurations incorporated herein will be omitted when it may make the subject matter of the present invention rather unclear.

It is desirable for a customer care representative (CCR) to be able to directly control activity on a portable electronic device (PED) and see the results of the activity to more easily debug, configure, and manage the PED. Seeing and controlling the activity on a PED enables a CCR to complete their tasks without relying on a user's understanding or ability to perform the tasks needed to debug, configure, and manage the PED. This flexibility increases the productivity of the CCR and the burden placed on customer care support to effectively and efficiently debug, configure, and manage portable electronic devices is reduced.

Remote terminal applications, such as X-Windows Terminal (XTERM) or virtual network connection (VCN), are useful tools for CCR's when assisting users with desktop or laptop computers. PED's such as a cellular phone, personal data assistant (PDA), portable gaming device, etc., may not have sufficient resources, such as storage capacity, memory, and processing power, needed to implement these applications. Because the PED has limited resources and for profitability reasons, it may be impractical to increase the resources of the PED to support such applications since it would increase costs. Further, it is desirable to make PED's as small as possible to promote their portability. By increasing the resources on a PED to be able to implement an XTERM or VCN application, the size may also increase.

Accordingly, the present disclosure provides an application that is able to be implemented using the relatively meager resources of the PED to enable a CCR to see and control any activity on a PED. The application may be implemented using software, hardware, firmware, and/or combination thereof on the PED. The application may utilize some communication systems that already exist on the PED to receive inputs from a customer care computer and implement them on the PED as if they were inputs received from the various inputs of the PED itself. For example, a remote customer care computer may send signals to the PED that may be interpreted as a keystroke entered by a user of the PED. Further, the application may use the communication systems to send a copy of the contents of the PED display to the customer care computer in order for the CCR to see what is being displayed on the PED. Alternatively, an index indicating the screen that is currently being displayed may be sent to the customer care computer. Therefore the application enables a CCR to remotely control and see activities on the PED as if the CCR were physically using the PED themselves. The above described application, which might also be referred to as a pseudo-remote terminal application, enables the functionality to emulate a remote terminal application's ability for a CCR to see and control activity on a remote device. The application achieves the functionality obtained by PC's via XTERM or VCN without requiring the resources to run such a resource intensive remote terminal application on the PED.

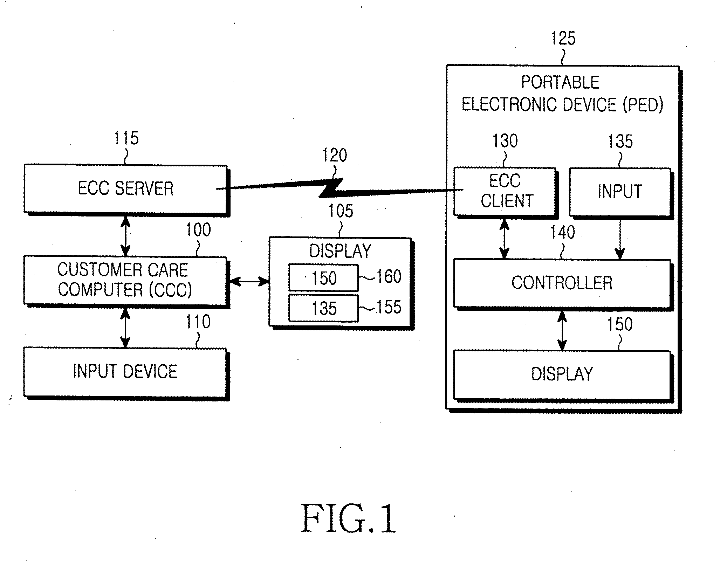

Fig. 1 depicts a remote management system for a portable electronic device which enables a CCR to see and control activity on a PED. As shown in Fig. 1, the remote management system for a portable electronic device includes a customer care system and at least one portable electronic device (PED) 125, wherein the customer care system includes a customer care computer (CCC) 100, a electronic customer care server (ECC) 115, an input device 110, and a display 105. The customer care computer (CCC) 100 has a display 105 that displays the operations of the CCC 100 and an input device 110 for allowing the CCR to manipulate the operations of the CCC 100. Input device 110 may be a keyboard, mouse, or any other user input device. The CCR may in some embodiments connect the CCC 100 with the PED 125 though an electronic customer care (ECC) server 115 over a communication medium 120. Communication medium 120 may be a wired, wireless networks, the Internet, optical, audio or any other known communication mediums or systems.

The PED 125 includes an input 135 for allowing a user to manipulate the operations of the PED 125. The input 135 may be any one or a combination of a keypad, touch screen, scrollbar, stylus, microphone, etc. Note that input 135 may also be an external device connected to PED 125 such as a full sized keyboard, etc. Input data generated by the manipulations of input 135 are communicated to a controller 140 for controlling the operation of the PED 125. Controller 140 may be implemented in software, firmware, hardware, or any combination of these. The operation and current state of the PED 125 are communicated to the user through a display 150. Controller 140 outputs display items indicating the operation and current state of the PED 125 to the display 150. Display 150 may be a liquid crystal display (LCD), a cathode ray tube (CRT) display, an external display, etc.

PED 125 also includes an ECC client 130 for communicating with the ECC server 115. Communication between the ECC server 115 and the ECC client 130 may occur through the use of any standard communication protocol. In the case of communication medium 120 being a wireless medium, the Open Mobile Alliance Device Management (OMA-DM) protocol may be used. This would enable an Internet-Over-The-Air Mobile Diagnostics and Electronic Customer Care (IOTA-MD/ECC) solution to be implemented. Commands may be sent to the PED 125 using any standard programming languages such as Java or protocols such as HTTP (Hypertext Transport Protocol).

Note that the ECC client 130 may be implemented using components that are already incorporated into any PED 125 which provides for communication with external devices. For example, if the PED 125 is configured to communicate with external devices via a wired connection, such as through a serial port or network cable, then the ECC client 130 may be implemented using the components which enable the PED 125 to communicate through the wired connection. Similarly, if the PED 125 is configured to communicate via a wireless connection, such as through cellular networks, then the ECC client 130 may be implemented using the components which enable the PED 125 to communicate through the wireless connection. Therefore, in some cases, no new system resources need to be added to the PED 125 to implement the ECC client 130 for communicating with an external device such as the EEC server 115 or the CCC 100.

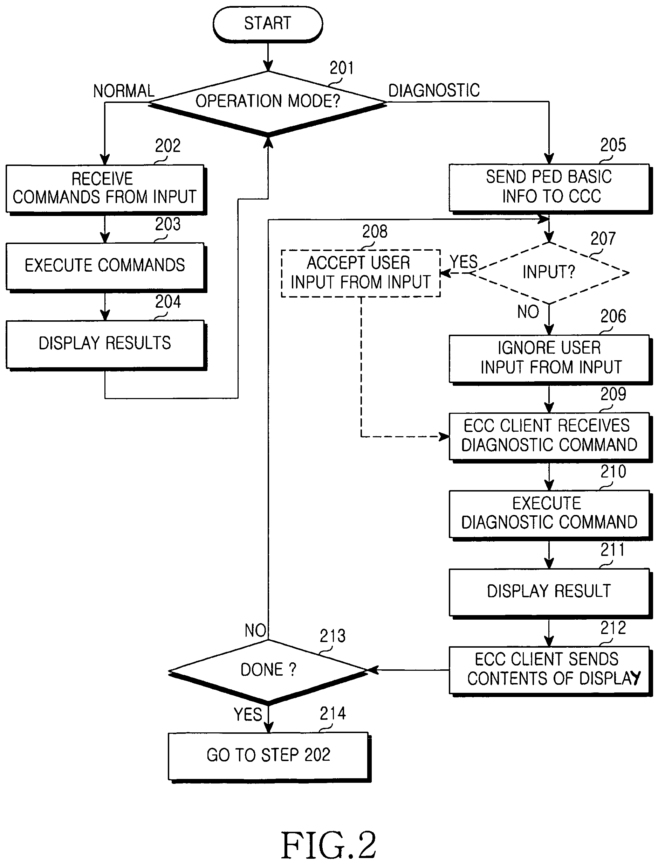

The operation of the PED 125 is described with respect to Fig. 2. Block 201 determines whether the PED 125 is to operate in a normal mode or a diagnostic mode of operation. This may be accomplished according to a diagnostic command from the CCC 100. For example, if the diagnostic command for the PED 125 to operate in a diagnostic mode of operation is received from the CCC 100, the PED 125 operates in the diagnostic mode of and proceeds to block 205. The diagnostic command includes all commands which are sent by the CCC 100 to the PED 125 in order to control the PED 125 according the perceived results after the CCC 100 has perceived the state of the PED 125 through a problem, which is related to the portable electronic device, reported by the portable electronic device. If the PED 125 is to operate in a normal mode of operation, then at block 202 the PED 125 receives a command from a user via input 135. At block 203, the controller 140 may interpret the input 135 and execute the command. At block 204, the results of the execution of the command are displayed on display 150. The process returns to block 201.

If at block 201 the PED 125 is to operate in a diagnostic mode of operation, then at block 205 the PED 125 sends basic information corresponding to the PED 125 to the CCC 100. The basic information may include the Original Equipment Manufacturer (OEM) number, a model number, a software version number, a hardware version number, and a current state of the PED 125. At block 206, The input information from the input 135 manipulated by the user is configured to be ignored in order to prevent the user from interfering with any operations being performed by a CCR. Alternatively, a determination may be made, at block 207, as to whether or not to accept a user's manipulation of input 135. This may allow the user to enter information at block 208, such as a name or address, to the PED 125. At block 209, the ECC client 130 receives a diagnostic command from the CCC 100. The ECC client 130 may then forward the received diagnostic command to the controller 140 for the PED 125 to execute the diagnostic command in block 210. Alternatively, at block 209, the ECC client 130 may receive the diagnostic command and transform it into a format for the controller 140 to execute the diagnostic command in block 210. In either alternative, the diagnostic command is executed by controller 140 as if were data generated through input 135, such as via a keypad on the PED 125.

At block 211, the result of the diagnostic command is displayed on display 150. The performing results of the diagnostic command comprise state information of the portable electronic device prior to performing the diagnostic command. At block 212, the contents displayed on the display 150 are sent to the ECC server 115 through the ECC client 130, so that the PED 125 communicates to the CCC 100. In addition, when the displayed content on the portable electronic device changes, the portable electronic device communicates the new display content to the customer care system. This may be accomplished by the controller 140 copying the contents of the display 150, such as from a display buffer or other memory area or location, and sending the copy to the ECC client 130.

Alternatively, the ECC client 130 itself may directly access the display 150 to send a copy of the contents to the CCC 100 through the ECC server 115. It is noted that, in either case, the contents of the display may be compressed by either the controller 140 or the ECC client 130 or both in order to reduce the bandwidth requirement to communicate the contents of the display 150.

In a further alternative, the controller 140 may send an index to the CCC 100 through the ECC server 115 indicating which screen graphical user interface (GUI), or other information is being displayed on display 150. The PED 125 may previously store a finite number of views that may be presented on the display 150, and a unique index may be associated with each of the views. The index may be represented by reference numbers, characters, or codes, for example. Each of the views may be of a particular screen, window, menu, etc. By communicating an index corresponding to the contents of the display, only the index number may need to be communicated rather than an entire image. In still another alternative, the PED 125 may indicate which screen is being displayed on display 150 by simply communicating to the CCC 100 a confirmation of receiving and processing a diagnostic command. The CCC 100 may then use static user interface mapping or other techniques to determine the contents displayed on display 150 as described in detail below.

At block 213, a determination is made as to whether or not the CCC 100 has indicated that the PED 125 is to return to the normal mode of operation. The process returns to one of blocks 206 or 207 in the diagnostic mode, otherwise block 214 transfers the PED 125 to block 202 in the normal mode of operation.

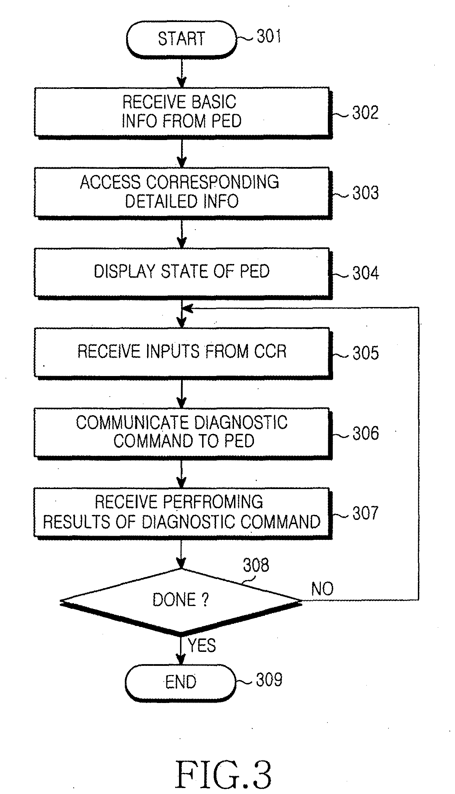

The operation of the CCC 100 is described with respect to Fig. 3. At block 301, the CCC 100 receives an instruction from the CCR, which instructs the CCC 100 to connect to the PED 125 and sends an instruction which instructs the PED 125 to operate in a diagnostic mode of operation. At block 302, the CCC 100 receives the basic information of the PED 125. The basic information allows the CCR to access a database (not shown) that may be provided on the CCC 100 or the ECC server 115, the database corresponds to the PED 125, and thus the CCC 100 accesses detailed information of the database at block 303. The database includes detailed information corresponding to each of a plurality of PEDs including the PED 125, and the detailed information may include information such as menu trees for following the operational path of the corresponding PED 125, as well as indexed images corresponding to each screen or menu in the operational path. The detailed information may also include information on input schemes of the PED 125, troubleshooting and diagnostic tasks to be completed by a CCR, or any other information useful to the CCR so as to allow them to debug, configure, and manage the PED 125.

Upon receiving the detailed information from the database, the CCC 100 may display the current state of the PED 125, at block 304. This may be accomplished by displaying a window 160 (see Fig. 1) showing the contents of the display 150 of the PED 125. Based on the state of the PED 125 and the desires and/or needs of the user, the CCR may then input a diagnostic command to the CCC 100, at block 305. The diagnostic command may be communicated from the CCC 100 to the PED 125 through the ECC server 115 to control the operation of the PED 125, at block 306. The commands are interpreted as input that the PED 125 would have generated through input 135, such as, for example, normal user input from a keypad on the PED 125. Upon receiving the diagnostic command, the PED 125 behaves as if the CCR were physically manipulating the input 135 of the PED 125.

The diagnostic command may be input to the CCC 100 by the CCR manipulating a displayed input window 155 showing the visually displayed various inputs 135 of the PED 125. For example, the input window 155 may visually show a keypad used as input 135 on the PED 125. Upon the CCR manipulation, for example, pressing a key displayed on a keypad of the PED 125 to input the diagnostic command, the CCC 100 communicates the diagnostic command to the PED 125, and then the controller 140 of the PED 125 interprets the diagnostic command as if it had come from the input 135.

Alternatively, the diagnostic commands may be input to the CCC 100 from the CCR by the CCR inputting the diagnostic commands into a command line application running on the CCC 100. The command line application running on the CCC 100 may then transform each diagnostic command in a format for the controller 140 to interpret the diagnostic command as if it had come from the input 135. While two examples of how the diagnostic commands are input to the CCC 100 are described above, the diagnostic commands may be used in any way so long as the commands are able to be interpreted, transformed, and/or received in a manner that the controller 140 is able to interpret the diagnostic command as if it had come from the input 135 or otherwise. Note that the interpretation and transformation of the diagnostic command may be accomplished by any of the CCC 100, the EEC client 130, or the controller 140, or otherwise.

At block 307, when the PED 125 has completed executing the command, results may be provided to the display 150. The content of the display 150 is sent to the CCC 100 and displayed on display 105 in one or a combination of a number of different ways. One technique for the results of the operation to be seen by the CCR is for the controller 140 to, for example, obtain data from the display buffer or send a copy of the contents of the display 150 upon transforming it in any suitable image format, such as a bitmap image, to the CCC 100. In any event, the CCR is able to see an image corresponding to what is displayed on the PED 125.

Alternatively, the PED 125 may send a screen index number to the CCC 100 indicating which screen is current being display upon the completion of each command. Also a combination of the PED 125 sending a screen index number and the PED 125 sending a screenshot corresponding to allow portions of the contents displayed on the PED 125 may be used. For example, if a given displayed content shows the contents of settings on the PED 125, then a screenshot showing an image corresponding to the contents of display 150 may be beneficial since many problems a user has with a PED 125 may result from incorrectly changing settings of the PED 125. On the other hand, if a given display screen is a non-changeable menu list then the screen index number may simply be sent to the CCC 100.

In another embodiment, the results of the diagnostic command may be seen at the CCC 100 through static user interface mapping. Static user interface mapping may be accomplished by communicating the menu tree(s) and the corresponding views of the PED 125 from the database to the CCC 100. Upon the CCC 100 receiving a confirmation from the PED 125 that a diagnostic command has been received and processed, the corresponding view in the process path of the menu tree(s) may be displayed. The PED 125 only communicating a confirmation of receiving and processing a diagnostic command may further reduce the amount of data that the PED 125 communicates to the CCC 100.

At block 308, a determination is made as to whether or not the CCR is finished controlling the PED 125. If not then blocks 305-308 are repeated. If the CCR is finished controlling the PED 125, then an indication is sent to the PED 125 to return to the normal mode of operation.

Note that while the above description is made with the CCR performing each of the blocks themselves, a test script may also be used to input a series of commands to the PED 125. Further, a hardware diagnostics script may also be loaded into the controller 140 to ensure that the PED 125 hardware is working as desired. Further, while Fig. 1 only illustrates one CCC 100 and one PED 125 there may be multiple instances of each.

The system shown in Fig. 1 enables a pseudo-remote terminal application to be implemented on a PED 125 in order to let a CCR remotely control the PED 125 and see the results without any user involvement. This application may be implemented on a low/medium-end PED 125 with insufficient resources to run remote terminal applications such as XTERM. Further, the application may use standardized communication protocols and existing communication equipment on the PED 125 so that no new resources need to be added to the PED 125 to implement the pseudo-remote terminal application.

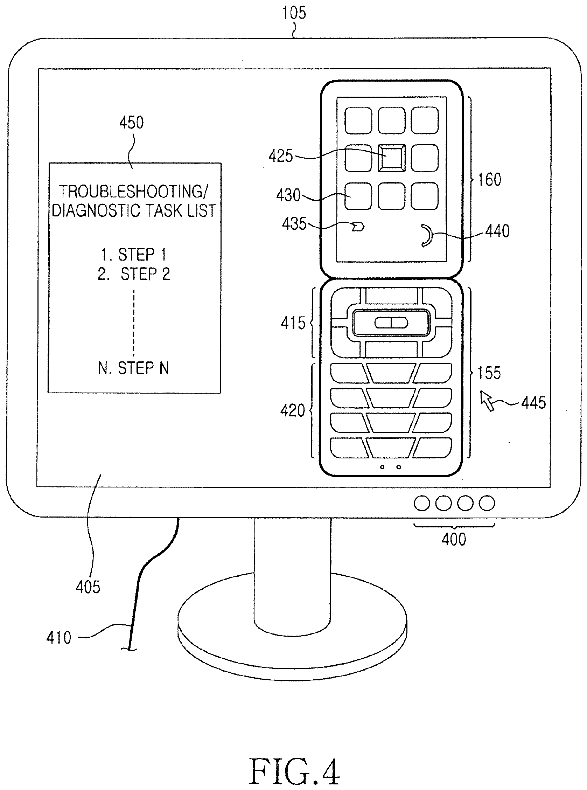

Fig. 4 depicts an example of the contents received from the PED 125 being displayed on display 105. As shown in Fig. 4, display 105 includes a set of controls 400 for controlling display settings such as brightness, contrast, etc., and a display area 405 for displaying the content input from the CCC 100 through input line 410. In the example shown in Fig. 4 the PED 125 is a cell phone and the cell phone is visually displayed in display area 405. The visual display of the cell phone includes the input window 155 and the display window 160. The input window 155 shows the bottom half of the cell phone and includes functional buttons 415 and a standard telephone keypad 420. Functional buttons 415 may include various selection buttons, a directional pad, or any other functional buttons present on PED 125.

The display window 160 shows the contents of display 150 on PED 125. In the example shown in Fig. 4 the display window 160 shows the top half of the mobile phone which may include a display with various menu icons 430. A currently selected menu icon is distinguished through a highlight 425 or any other distinguishing mark. Also displayed is a menu navigation icon 435 corresponding to a functional button 415 for moving forward with the currently selected control icon 445. Similarly, a menu navigation icon 440 is displayed corresponding to a functional button 415 for moving back to the previously displayed menu screen. Note that the menu navigation icons 435 and 440 may also display text such as "Menu", "Next", "Prev", "Back", or any other appropriate text. Also note that a combination of icons and text may be used for various menu screens.

The visual representation of the PED 125 may be controlled in the same way that the physical PED 125 would be, except instead of the CCR using their hands to manipulate the PED 125, the CCR would use a control icon 445, such as a mouse cursor to manipulate the visual representation of input 135 in input window 155. Note that the display area 405 may be touch sensitive in which case the CCR may physically manipulate the screen by touching the visual representation of input 135. A window 450 may also be displayed on display 105 to show a CCR a troubleshooting and/or diagnostic task list to assist the CCR in troubleshooting the PED 125. While the example shown in Fig. 4 depicts a mobile phone, the PED 125 may be any portable electronic device such as a personal data assistant (PDA), portable gaming device, etc. While the above example showed a two-dimensional representation of the PED 125, it is noted that a three-dimensional representation of the PED 125 may be used in order to enable a CCR to have full access to other features and functions of the PED 125. For example, any inputs 135 not present on a front face of the PED 125 may become accessible, for example, by rotating the image of the mobile phone on the display 105. A volume control on the side of the PED 125 might be an example of such input.

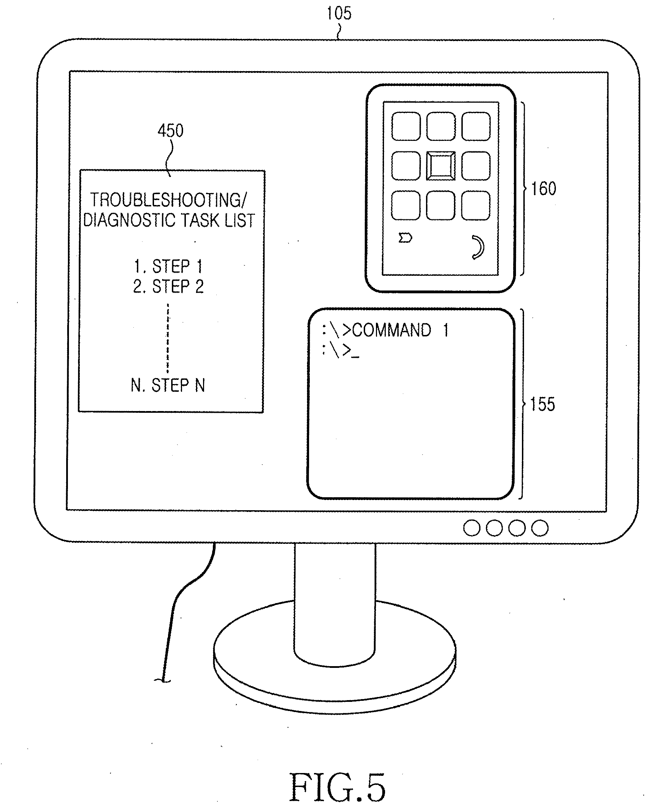

Alternatively, as shown in Fig. 5 the input window 155 may be a command line window for allowing the CCR to input commands to the CCC 100. The CCR may input the commands as text strings or otherwise using the input device 110 such as a keyboard.

Disclosed above is an implementation of a pseudo-remote terminal application which enables a CCR to remotely control the PED 125 and see the results without any user involvement. The pseudo-remote terminal application may be implemented using standardized communication protocols and existing communication systems on the PED 125. This enables the pseudo-remote terminal application to be implemented on low/medium-end PED's.

It will be appreciated that the functionality on the PED 125 to receive the diagnostic commands from the CCC 100 and promote processing these diagnostic commands as if they were user input may be provided by the EEC client 130, controller 140, or other systems or combinations thereof. Similarly the PED 125 may display information obtained, for example, from a display buffer or other memory location to provide to the CCC 100. The display information may be obtained or directed by the EEC client 130, controller 140, or other systems or combinations of systems on the PED 125.

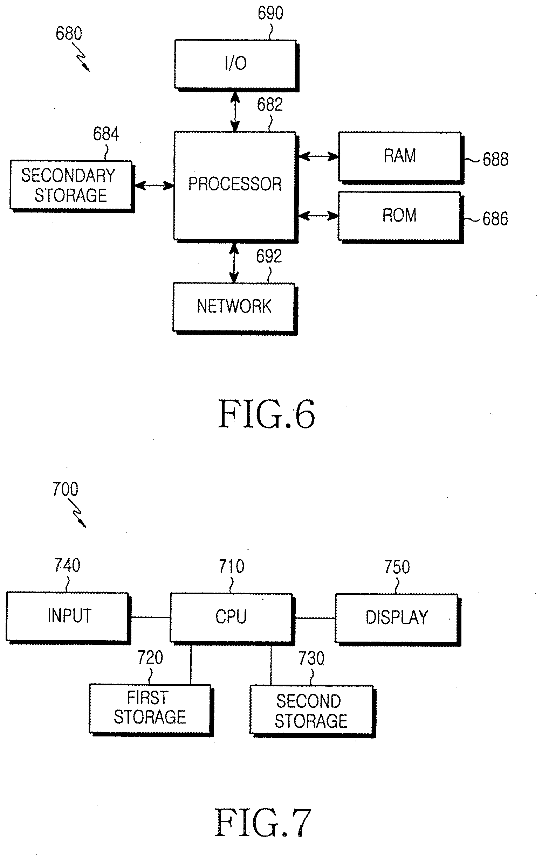

The CCC 100 described above may be implemented on any general-purpose computer with sufficient processing power, memory resources, and network throughput capability to handle the workload placed upon it. Fig. 6 illustrates a typical, general-purpose computer system suitable for implementing one or more embodiments disclosed herein. The computer system 680 includes a processor 682 (which may be referred to as a central processor unit or CPU) that is in communication with memory devices including secondary storage 684, read only memory (ROM) 686, random access memory (RAM) 688, input/output (I/O) 690 devices, and network connectivity devices 692. The processor may be implemented as one or more CPU chips.

The secondary storage 684 is typically comprised of one or more disk drives or tape drives and is used for non-volatile storage of data and as an overflow data storage device if RAM 688 is not large enough to hold all working data. Secondary storage 684 may be used to store programs which are loaded into RAM 688 when such programs are selected for execution. The ROM 686 is used to store instructions and perhaps data which are read during program execution. ROM 686 is a non-volatile memory device which typically has a small memory capacity relative to the larger memory capacity of secondary storage. The RAM 688 is used to store volatile data and perhaps to store instructions. Access to both ROM 686 and RAM 688 is typically faster than to secondary storage 684.

I/O 690 devices may include printers, video monitors, liquid crystal displays (LCDs), touch screen displays, keyboards, keypads, switches, dials, mice, track balls, voice recognizers, card readers, paper tape readers, or other well-known input devices. The network connectivity devices 692 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity 692 devices may enable the processor 682 to communicate with an Internet or one or more intranets. With such a network connection, it is contemplated that the processor 682 might receive information from the network, or might output information to the network in the course of performing the above-described method blocks. Such information, which is often represented as a sequence of instructions to be executed using processor 682, may be received from and outputted to the network, for example, in the form of a computer data signal embodied in a carrier wave.

Such information, which may include data or instructions to be executed using processor 682 for example, may be received from and outputted to the network, for example, in the form of a computer data baseband signal or signal embodied in a carrier wave. The baseband signal or signal embodied in the carrier wave generated by the network connectivity 692 devices may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 682 executes instructions, codes, computer programs, scripts which it accesses from hard disk, floppy disk, optical disk (these various disk based systems may all be considered secondary storage 684), ROM 686, RAM 688, or the network connectivity devices 692.

The PED system described above may be implemented on any hand-held mobile electronic device or mobile handset 700 such as is well known to those skilled in the art. An exemplary mobile handset 700 for implementing one or more embodiments disclosed herein is illustrated in Figure 7. The mobile handset 700 includes a processor 710 (which may be referred to as a central processor unit or CPU) that is coupled to a first storage area 720, a second storage area 730, an input device 740 such as a keypad, and an output device such as a display screen 750.

The processor 710 may be implemented as one or more CPU chips and may execute instructions, codes, computer programs, or scripts that it accesses from the first storage area 720 or the second storage area 730. The first storage area 720 might be a non-volatile memory such as flash memory. A container and other mobile handset 700 data would typically be installed in the first storage area 720. The second storage area 730 might be firmware or a similar type of memory. The runtime engine and the device's operating system would typically be installed in the second storage area 730.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein, but may be modified within the scope of the appended claims. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as directly coupled or communicating with each other may be coupled through some interface or device, such that the items may no longer be considered directly coupled to each other but may still be indirectly coupled and in communication, whether electrically, mechanically, or otherwise with one another. Other examples of changes, substitutions, and alterations are ascertainable by one skilled in the art and could be made without departing from the scope disclosed herein.

## Claims

1. A remote management system for a portable electronic device (125), comprising:
a customer care system configured to remotely communicate with at least one portable electronic device (125), the customer care system being operable to send a diagnostic command corresponding to a command for diagnosing current state of the at least one portable electronic device and to receive performing results of the diagnostic command corresponding to the diagnostic command; and
the portable electronic device (125) comprising a first display (150) and an input (135), the portable electronic device (125) being operable to interpret the received diagnostic command as input by a user, to perform diagnosis according to the diagnostic command, and to display results of the diagnosis on the first display (150), wherein the portable electronic device (125) further is operable to send the performing results of the diagnostic command including the displayed results to the customer care system;
wherein the customer care system comprises a second display (105) configured to display a display window (160) in order to display results which are included in the performing results of the diagnostic command as displayed on the first display (150) of the portable electronic device (125) and an input window (155) in order to visually display the input (135) of the portable electronic device (125),
wherein the diagnostic command is input to the customer care system by a customer care representative manipulating the displayed input window (155) showing the input (135) of the portable electronic device (125) and then communicated to the portable electronic device (125),
wherein the portable electronic device (125) is configured to interpret the diagnostic command as it would have been generated through the input (135) of the portable electronic device (125).

2. The remote management system for a portable electronic device (125) as claimed in claim 1, wherein the portable electronic device (125) comprises a component operable to let information related to an image displayed on the first display (150) of the portable electronic device (125) be included in the performing results of the diagnostic command, and communicates the performing results of the diagnostic command to the customer care system.

3. The remote management system for a portable electronic device (125) as claimed in claim 2, wherein the information is an index related to a window being displayed on the first display (150) of the portable electronic device (125).

4. The remote management system for a portable electronic device (125) as claimed in claim 2, wherein the information is an index related to a menu being displayed on the first display (150) of the portable electronic device (125).

5. The remote management system for a portable electronic device (125) as claimed in claim 1, wherein the portable electronic device (125) includes a component operable to communicate information related to an image displayed on the first display (150) of the portable electronic device (125) from a video buffer on the portable electric device (125) to the customer care system.

6. A remote management method for a portable electronic device (125) that comprises a first display (150) and an input (135) and which is operable to remotely communicate with a customer care system, the method comprising:
initiating, by the customer care system, communication with the portable electronic device (125);
displaying, in a display window (160) on a second display (105) of the customer care system, an image substantially similar to the image displayed on the first display (150) of the portable electronic device (125);
displaying, in an input window (155) on the second display (105) of the customer system, an image related to a keypad according to the input (135) of the portable electronic device (125);
selecting one or more of the keys on the image of the keypad displayed in the input window (155) on the second display of the customer care system;
sending, by the customer care system, a diagnostic command corresponding to a command for diagnosing current state of the portable electronic device (125) by communicating to the portable electronic device (125) the command corresponding to the key selected on the input window (155) of the customer care system as the diagnostic command;
interpreting, by the portable electronic device (125), the received diagnostic command as input;
displaying, by the portable electronic device (125), results of performing the interpreted diagnostic command and sending the displayed information as performing results of the diagnostic command to the customer care system;
wherein selecting is carried out by a customer care representative manipulating the displayed input window (155) showing the keypad of the portable electronic device (125); and
interpreting is carried out in that the portable electronic device (125) interprets the diagnosis command as it would have been generated through input by the keypad of the portable electronic device (125).

7. The remote management method for a portable electronic device (125) as claimed in claim 6, wherein the step of initiating, by the customer care system, communication with the portable electronic device (125) comprises:
detecting contact from the customer care representative (100);
reporting a problem related to the portable electronic device (125); and
initiating communication between the customer care system and the portable electronic device (125) via a telecommunications network.

8. The remote management method for a portable electronic device (125) as claimed in claim 6, further comprising when the display information on the portable electronic device (125) changes, communicating, by the portable electronic device (125), new display information to the customer care system.

9. The remote management method for a portable electronic device (125) as claimed in claim 6, wherein the displayed information in the step of sending, by the customer care system, a diagnostic command corresponding a command for diagnosing current state of the portable electronic device (125), is information stored in a video buffer.

10. The remote management method for a portable electronic device (125) as claimed in claim 6, wherein the step of sending the performing results of the diagnostic command to the customer care system comprises:
displaying the results for performing the diagnostic command interpreted by the portable electronic device (125);
identifying a predetermined index number corresponding to the information being displayed; and
communicating the index number to the customer care system.

11. The remote management method for a portable electronic device (125) as claimed in claim 10, further comprising:
receiving the index number by the customer care system; and
displaying, by the customer care system, an image corresponding to the index number.

## Patentansprüche

1. Fernsteuerungsverwaltungssystem für ein tragbares elektronisches Gerät (125), mit:
einem Kundenwartungssystem, das ausgebildet ist, mit mindestens einem tragbaren elektronischen Gerät (125) aus der Ferne zu kommunizieren, wobei das Kundenwartungssystem in der Lage ist, einen Diagnosebefehl, der einem Befehl zum Diagnostizieren eines aktuellen Zustands des mindestens einen tragbaren elektronischen Geräts entspricht, zu senden und Ausführungsergebnisse des Diagnosebefehls, die dem Diagnosebefehl entsprechen, zu empfangen; und
wobei das tragbare elektronische Gerät (125) eine erste Anzeige (150) und eine Eingabeeinrichtung (135) aufweist, das tragbare elektronische Gerät (125) in der Lage ist, den empfangenen Diagnosebefehl als Eingabe eines Benutzers zu interpretieren, eine Diagnose gemäß dem Diagnosebefehl auszuführen und Ergebnisse der Diagnose auf der ersten Anzeige (150) anzuzeigen, wobei das tragbare elektronische Gerät (125) ferner in der Lage ist, die Ausführungsergebnisse des Diagnosebefehls einschließlich der angezeigten Ergebnisse an das Kundenwartungssystem zu senden;
wobei das Kundenwartungssystem eine zweite Anzeige (105) aufweist, die ausgebildet ist, ein Anzeigefenster (160) anzuzeigen, um Ergebnisse, die in den Ausführungsergebnissen des Diagnosebefehls enthalten sind, anzuzeigen wie sie auf der ersten Anzeige (150) des tragbaren elektronischen Geräts (125) angezeigt werden, und um ein Eingabefenster (155) anzuzeigen, um die Eingabe (135) des tragbaren elektronischen Geräts (125) visuell anzuzeigen,
wobei der Diagnosebefehl in das Kundenwartungssystem eingegeben wird durch einen Kundenwartungsrepräsentanten, der mit dem angezeigten Eingabefenster (155) interagiert, das die Eingabe (135) des tragbaren elektronischen Geräts (125) zeigt, und anschließend zu dem tragbaren elektronischen Gerät (125) übermittelt wird,
wobei das tragbare elektronische Gerät (125) ausgebildet ist, den Diagnosebefehl so zu interpretieren, als ob dieser durch die Eingabeeinrichtung (135) des tragbaren elektronischen Geräts (125) erzeugt worden wäre.

2. Fernsteuerverwaltungssystem für ein tragbares elektronisches Gerät (125) nach Anspruch 1, wobei das tragbare elektronische Gerät (125) eine Komponente aufweist, die ausgebildet ist, Information bezüglich eines Bildes, das auf der ersten Anzeige (150) des tragbaren elektronischen Geräts (125) angezeigt wird, in die Ausführungsergebnisse des Diagnosebefehls einbinden zu lassen, und die die Ausführungsergebnisse des Diagnosebefehls zu dem Kundenwartungssystem übermittelt.

3. Fernsteuerverwaltungssystem für ein tragbares elektronisches Gerät (125) nach Anspruch 2, wobei die Information ein Index bezüglich eines Fensters ist, das auf der ersten Anzeige (150) des tragbaren elektronischen Geräts (125) angezeigt wird.

4. Fernsteuerverwaltungssystem für ein tragbares elektronisches Gerät (125) nach Anspruch 2, wobei die Information ein Index bezüglich eines Menüs ist, das auf der ersten Anzeige (150) des tragbaren elektronischen Geräts (125) angezeigt wird.

5. Fernsteuerverwaltungssystem für ein tragbares elektronisches Gerät (125) nach Anspruch 1, wobei das tragbare elektronische Gerät (125) eine Komponente aufweist, die ausgebildet, Information bezüglich eines Bildes, das auf der ersten Anzeige (150) des tragbaren elektronischen Geräts (125) angezeigt wird, aus einem Video-Speicher in dem tragbaren elektronischen Gerät (125) zu dem Kundenwartungssystem zu übertragen.

6. Fernsteuerverwaltungsverfahren für ein tragbares elektronisches Gerät (125), das eine erste Anzeige (150) und eine Eingabeeinrichtung (135) aufweist, und das ausgebildet ist, mit einem Kundenwartungssystem in der Ferne zu kommunizieren, wobei das Verfahren umfasst:
Initiieren, durch das Kundenwartungssystem, einer Kommunikation mit dem tragbaren elektronischen Gerät (125);
Anzeigen, in einem Anzeigefenster (160) auf einer zweiten Anzeige (105) des Kundenwartungssystems, eines Bildes, das im Wesentlichen ähnlich zu dem Bild ist, das auf der ersten Anzeige (150) des tragbaren elektronischen Geräts (125) angezeigt wird;
Anzeigen, in einem Eingabefenster (155) auf der zweiten Anzeige (105) des Kundenwartungssystems, eines Bildes, das sich auf eine Tastatur gemäß der Eingabeeinrichtung (135) des tragbaren elektronischen Geräts (125) betrifft;
Auswählen einer oder mehrerer der Tasten auf dem Bild der in dem Eingangsfenster (155) auf der zweiten Anzeige des Kundenwartungssystems angezeigten Tastatur;
Senden, durch das Kundenwartungssystem, eines Diagnosebefehls, der einem Befehl zum Diagnostizieren eines aktuellen Zustands des tragbaren elektronischen Geräts (125) entspricht, durch Übermitteln des Befehls, der der auf dem Eingabefenster (155) des Kundenwartungssystems ausgewählten Taste entspricht, als Diagnosebefehl zu dem tragbaren elektronischen Gerät (125);
Interpretieren, durch das tragbare elektronische Gerät (125), des empfangenen Diagnosebefehls als Eingabe;
Anzeigen, durch das tragbare elektronische Gerät (125), von Ergebnissen des Ausführens des interpretierten Diagnosebefehls, und Senden der angezeigten Information als Ausführungsergebnisse des Diagnosebefehls an das Kundenwartungssystem;
wobei das Auswählen ausgeführt wird durch einen Kundenwartungsrepräsentanten, der mit dem angezeigten Eingabefenster (155) interagiert, das die Tastatur des tragbaren elektronischen Geräts (125) zeigt; und
das Interpretieren ausgeführt wird, indem das tragbare elektronische Gerät (125) den Diagnosebefehl so interpretiert, als wäre er durch Eingabe mittels der Tastatur des tragbaren elektronischen Geräts (125) erzeugt worden.

7. Fernsteuerverwaltungsverfahren für ein tragbares elektronisches Gerät (125) nach Anspruch 6, wobei der Schritt des Initiierens, durch das Kundenwartungssystem, einer Kommunikation mit dem tragbaren elektronischen Gerät (125) umfasst:
Erkennen des Kontakts mit dem Kundenwartungsrepräsentanten (100);
Berichten eines Problems bezüglich des tragbaren elektronischen Geräts (125); und
Initiieren einer Kommunikation zwischen dem Kundenwartungssystem und dem tragbaren elektronischen Gerät (125) über ein Telekommunikationsnetzwerk.

8. Fernsteuerverwaltungssystem für ein tragbares elektronisches Gerät (125) nach Anspruch 6, das ferner umfasst: wenn die Anzeigeinformation auf dem tragbaren elektronischen Gerät (125) sich ändert, Übermitteln einer neuen Information zu dem Kundenwartungssystem durch das tragbare elektronische Gerät (125).

9. Fernsteuerverwaltungsverfahren für ein tragbares elektronisches Gerät (125) nach Anspruch 6, wobei die angezeigte Information in dem Schritt des Sendens eines Diagnosebefehls durch das Kundenwartungssystem, der einem Befehl zum Diagnostizieren eines aktuellen Zustands des tragbaren elektronischen Geräts (125) entspricht, eine Information ist, die in einem Video-Speicher gespeichert ist.

10. Fernsteuerverwaltungsverfahren für ein tragbares elektronisches Gerät (125) nach Anspruch 6, wobei der Schritt des Sendens der Ausführungsergebnisse des Diagnosebefehls an das Kundenwartungssystem umfasst:
Anzeigen der Ergebnisse zum Ausführen des Diagnosebefehls, der von dem tragbaren elektronischen Gerät (125) interpretiert wird;
Ermitteln einer vorbestimmten Indexzahl, die der gerade angezeigten Information entspricht; und
Übermitteln der Indexzahl zu dem Kundenwartungssystem.

11. Fernsteuerverwaltungsverfahren für ein tragbares elektronisches Gerät (125) nach Anspruch 10, das ferner umfasst:
Empfangen der Indexzahl durch das Kundenwartungssystem; und
Anzeigen eines der Indexzahl entsprechenden Bildes durch das Kundenwartungssystem.

## Revendications

1. Système de gestion à distance pour un dispositif électronique portatif (125), comprenant :
un système de service à la clientèle configuré pour communiquer à distance avec au moins un dispositif électronique portatif (125), le système de service à la clientèle pouvant être exploité pour envoyer une commande de diagnostic correspondant à une commande destinée à diagnostiquer l'état courant du ou des dispositifs électronique portatifs, et pour recevoir les résultats d'exécution de la commande de diagnostic correspondant à la commande de diagnostic, et
le dispositif électronique portatif (125) comprenant un premier afficheur (150) et une entrée (135), le dispositif électronique portatif (125) pouvant être exploité pour interpréter la commande de diagnostic reçue comme entrée par un utilisateur, dans le but d'effectuer un diagnostic en fonction de la commande de diagnostic et d'afficher les résultats du diagnostic sur le premier afficheur (150), le dispositif électronique portatif (125) pouvant en outre être exploité pour envoyer les résultats d'exécution de la commande de diagnostic, y compris les résultats affichés, au système de service à la clientèle,
dans lequel
le système de service à la clientèle comprend un second afficheur (105) configuré pour afficher une fenêtre d'affichage (160) afin d'afficher des résultats qui sont inclus dans les résultats d'exécution de la commande de diagnostic tel qu'ils sont affichés sur le premier afficheur (150) du dispositif électronique portatif (125), ainsi qu'une fenêtre d'entrée (155) afin d'afficher visuellement l'entrée (135) du dispositif électronique portatif (125),
dans lequel la commande de diagnostic est appliquée en entrée du système de service à la clientèle par un mandataire du service clientèle manipulant la fenêtre d'entrée (155) affichée représentant l'entrée (135) du dispositif électronique portatif (125), et elle est ensuite communiquée au dispositif électronique portatif (125),
dans lequel le dispositif électronique portatif (125) est configuré pour interpréter la commande de diagnostic comme si elle avait été générée par l'intermédiaire de l'entrée (135) du dispositif électronique portatif (125).

2. Système de gestion à distance pour un dispositif électronique portatif (125) selon la revendication 1, dans lequel le dispositif électronique portatif (125) comprend un composant pouvant être exploité pour autoriser l'inclusion d'informations se rapportant à une image affichée sur le premier afficheur (150) du dispositif électronique portatif (125) dans les résultats d'exécution de la commande de diagnostic, et il communique les résultats d'exécution de la commande de diagnostic au système de service à la clientèle.

3. Système de gestion à distance pour un dispositif électronique portatif (125) selon la revendication 2, dans lequel les informations sont un index se rapportant à une fenêtre affichée sur le premier afficheur (150) du dispositif électronique portatif (125).

4. Système de gestion à distance pour un dispositif électronique portatif (125) selon la revendication 2, dans lequel les informations sont un index se rapportant à un menu affiché sur le premier afficheur (150) du dispositif électronique portatif (125).

5. Système de gestion à distance pour un dispositif électronique portatif (125) selon la revendication 1, dans lequel le dispositif électronique portatif (125) inclut un composant pouvant être exploité pour communiquer au système de service à la clientèle des informations se rapportant à une image affichée sur le premier afficheur (150) du dispositif électronique portatif (125) provenant d'une mémoire tampon vidéo sur le dispositif électronique portatif (125) .

6. Procédé de gestion à distance pour un dispositif électronique portatif (125) qui comprend un premier afficheur (150) et une entrée (135) et qui est exploitable pour communiquer à distance avec un système de service à la clientèle, le procédé comprenant :
l'initiation, par le système de service à la clientèle, d'une communication avec le dispositif électronique portatif (125),
l'affichage, dans une fenêtre d'affichage (160) sur un second afficheur (105) du système de service à la clientèle, d'une image pratiquement identique à l'image affichée sur le premier afficheur (150) du dispositif électronique portatif (125) ,
l'affichage, dans une fenêtre d'entrée (155) sur le second afficheur (105) du système client, d'une image se rapportant à un clavier en fonction de l'entrée (135) du dispositif électronique portatif (125),
la sélection d'une ou plusieurs des touches sur l'image du clavier affiché dans la fenêtre d'entrée (155) sur le second afficheur du système de service à la clientèle,
l'envoi, par le système de service à la clientèle, d'une commande de diagnostic correspondant à une commande destinée à diagnostiquer l'état courant du dispositif électronique portatif (125) en communiquant au dispositif électronique portatif (125) la commande correspondant à la touche sélectionnée sur la fenêtre d'entrée (155) du système de service à la clientèle en tant que commande de diagnostic,
l'interprétation, par le dispositif électronique portatif (125), de la commande de diagnostic reçue en tant qu'entrée,
l'affichage, par le dispositif électronique portatif (125), de résultats d'exécution de la commande de diagnostic interprétée et l'envoi au système de service à la clientèle des informations affichées sous forme de résultats d'exécution de la commande de diagnostic,
dans lequel
la sélection est exécutée par un mandataire du service clientèle manipulant la fenêtre d'entrée (155) affichée représentant le clavier du dispositif électronique portatif (125), et
l'interprétation est exécutée en ce que le dispositif électronique portatif (125) interprète la commande de diagnostic comme si elle avait été générée par l'intermédiaire d'une entrée sur le clavier du dispositif électronique portatif (125).

7. Procédé de gestion à distance pour un dispositif électronique portatif (125) selon la revendication 6, dans lequel l'étape d'initiation par le système de service à la clientèle d'une communication avec le dispositif électronique portatif (125) comprend :
la détection d'un contact par le mandataire du service clientèle (100),
la signalisation d'un problème se rapportant au dispositif électronique portatif (125), et
l'initiation d'une communication entre le système de service à la clientèle et le dispositif électronique portatif (125) par l'intermédiaire d'un réseau de télécommunication.

8. Procédé de gestion à distance pour un dispositif électronique portatif (125) selon la revendication 6, comprenant en outre la communication, par le dispositif électronique portatif (125), lorsque les informations d'affichage sur le dispositif électronique portatif (125) changent, de nouvelles informations d'affichage au système de service à la clientèle.

9. Procédé de gestion à distance pour un dispositif électronique portatif (125) selon la revendication 6, dans lequel les informations affichées lors de l'étape d'envoi, par le système de service à la clientèle, d'une commande de diagnostic correspondant à une commande destinée à diagnostiquer l'état courant du dispositif électronique portatif (125), sont des informations stockées dans une mémoire tampon vidéo.

10. Procédé de gestion à distance pour un dispositif électronique portatif (125) selon la revendication 6, dans lequel l'étape d'envoi des résultats d'exécution de la commande de diagnostic au système de service à la clientèle comprend :
l'affichage des résultats afin d'effectuer la commande diagnostic interprétée par le dispositif électronique portatif (125),
l'identification d'un numéro d'index prédéterminé correspondant aux informations affichées, et
la communication du numéro d'index au système de service à la clientèle.

11. Procédé de gestion à distance pour un dispositif électronique portatif (125) selon la revendication 10, comprenant en outre :
la réception du numéro d'index par le système de service à la clientèle, et
l'affichage, par le système de service à la clientèle, d'une image correspondant au numéro d'index.
